# EUROPÄISCHE PATENTANMELDUNG

(11) **EP 1 983 273 A2**
(43) Veröffentlichungstag der Anmeldung: **22.10.2008**
(21) Anmeldenummer: 08006756.4
(22) Anmeldetag: 02.04.2008
(51) Int. Cl.: F24H 9/12

(54) **Vorrichtung zur Einströmung von Heizmedium in einen Heizkörper**

(30) Priorität: 05.04.2007 DE 102007016960
(71) Anmelder: KERMI GmbH, 94447 Plattling (DE)
(72) Erfinder: Hofinger, Roland, Dipl.-Ing. (FH), 94469 Deggendorf (DE); Harrer, Robert, 94563 Otzing (DE)
(74) Vertreter: Mischung, Ralf

(57) **Zusammenfassung**

Die Erfindung betrifft eine Vorrichtung zur gezielten Aufteilung einer in einen Heizkörper einströmenden Vorlaufmenge in Bezug auf mehrere Durchströmungszonen.
Insbesondere - aber nicht ausschließlich - richtet sich die Erfindung auf Heizkörper mit zwei im Wesentlichen voneinander getrennten Durchströmungszonen, etwa einer vorderen und einer hinteren Platte. Die beiden Platten sind typischerweise parallel zueinander angeordnet, wobei die vordere Platte dem Raum zugewandt ist, während die hintere Platte gegen die Gebäudewand gerichtet ist. Jede Platte bildet dabei eine Durchströmungszone, die im Wesentlichen von der benachbarten Durchströmungszone getrennt ist. Die Zonen müssen dabei nicht unbedingt Plattengestalt haben, von Bedeutung ist vielmehr eine vordere, dem Raum zugewandte Zone und eine diese erste Zone von der Gebäudewand trennende zweite Durchströmungszone.

## Beschreibung

Die vorliegende Erfindung betrifft eine Vorrichtung zur Einströmung von Heizmedium in einen Heizkörper nach dem Oberbegriff des Anspruchs 1.

Insbesondere - aber nicht ausschließlich - richtet sich die Erfindung auf Heizkörper mit zwei im Wesentlichen voneinander getrennten Durchströmungszonen, etwa einer vorderen und einer hinteren Platte. Die beiden Platten sind typischerweise parallel zueinander angeordnet, wobei die vordere Platte dem Raum zugewandt ist, während die hintere Platte gegen die Gebäudewand gerichtet ist. Jede Platte bildet dabei eine Durchströmungszone, die im Wesentlichen von der benachbarten Durchströmungszone getrennt ist. Die Zonen müssen dabei nicht unbedingt Plattengestalt haben, von Bedeutung ist vielmehr eine vordere, dem Raum zugewandte Zone und eine diese erste Zone von der Gebäudewand trennende zweite Durchströmungszone.

Derartige "Wohlfühlheizkörper" sind bekannt und erzeugen ein behagliches Klima insbesondere dadurch, dass die Temperaturen der beiden Durchströmungszonen unterschiedlich gewählt werden, was durch eine besondere aufwändige Strömungsführung innerhalb des Heizkörpers realisiert wird. Insbesondere ist bekannt, den Vorlauf zunächst durch die vordere Durchströmungszone (im Weiteren in mit "vorderen" die dem Raum zugewandte Zone gemeint) geleitet wird, um anschließend in die der Wand zugewandte Zone geführt zu werden, woran sich dann der Rücklauf anschließt. Derartige Heizkörper bzw. Strömungsführungen sind aufwändig und damit teuer.

Aufgabe der Erfindung ist es daher, einen einfacheren Weg zur Durchströmung von Heizkörpern mit mehreren Durchströmungszonen aufzuzeigen.

Die Aufgabe wird gelöst durch eine Vorrichtung nach Anspruch 1.

Die Erfindung geht dabei von der Erkenntnis aus, dass ein gezieltes und insbesondere unterschiedliches Strömungsverhalten in mehreren Durchströmungszonen eines Heizkörpers dadurch erreicht werden kann, dass eine Vorrichtung zur Einströmung des Heizmediums vorgesehen wird, die Mittel aufweist, um die Strömungsanteile in die jeweiligen Durchströmungszonen gezielt zu beeinflussen. Die Mittel der erfindungsgemäßen Vorrichtung sollen insbesondere den gemeinsam in den Heizkörper zugeführten Vorlauf in Strömungsanteile aufteilen, von denen ein Teil in die vordere Durchströmungszone geleitet wird, während ein anderer (bzw. der verbleibende) Teil der hinteren Durchströmungszone zugeführt wird. Die Vorrichtung, die sich insbesondere im Bereich des für alle Durchströmungszonen gemeinsamen Zulaufs des Heizkörpers befindet teilt dabei das zugeführte Heizmedium beispielsweise so auf, dass 70 % des Durchsatzes in die vordere Zone geleitet werden, und lediglich 30 % in die hintere Zone. Insbesondere wird erfindungsgemäß dadurch Einfluss genommen auf die die einzelnen Zonen durchströmenden Mengen an Heizmedium, wodurch auch unterschiedliche Temperaturen zwischen der vorderen und der hinteren Heizkörperplatte erzielbar sind.

Erfindungsgemäß wird die Vorrichtung dabei von dem für alle Durchströmungszonen gemeinsamen Zulauf durchströmt bzw. angeströmt, um diesen Zulauf durch die vorgenannten Mittel derart zu beeinflussen, dass unterschiedliche Teilströme in die einzelnen Durchströmungszonen eingeströmt werden.

Dadurch verringert sich erfindungsgemäß der ansonsten sehr hohe konstruktive Aufwand für die bisher aus dem Stand der Technik bekannte Strömungsführung, da lediglich die erfindungsgemäße Vorrichtung, die insbesondere im Bereich des Heizkörperventils oder sogar als solches ausgebildet sein kann, diese Aufteilung vornimmt.

Eine vorteilhafte Ausführungsform der Erfindung sieht vor, dass die Vorrichtung als ein vom gemeinsamen Vorlauf durchströmtes Ventil ausgebildet ist. Dabei handelt es sich vorzugsweise um das von dem Bediener betätigte Heizkörperventil, mit dem der Zustrom in den Heizkörper insgesamt geregelt wird. Die strömungsaufteilenden Mittel sind dabei als Teil des Ventils ausgebildet und können mit diesem leicht vom Heizkörper abgenommen bzw. ausgetauscht werden. Dadurch können ohne große Schwierigkeit auch andere Mittel an einem gegebenenfalls anderen Ventil zum Einsatz kommen, um die erfindungsgemäße Aufteilung der Strömung vorzunehmen.

Eine Ausführungsform eines solchen erfindungsgemäßen Ventils sieht dabei vor, dass das Ventil einen Ventileinsatz umfasst, der ein in radialer Richtung ausgebildetes und dabei in Umfangsrichtung begrenztes Ausströmfenster aufweist. Bei in axialer Richtung in den Ventileinsatz einströmendem Vorlauf tritt das Heizmedium durch das Ausströmfenster in radialer Richtung aus, um von dort in den Heizkörper zu gelangen. Erfindungsgemäß ist das Ventil dabei so ausgebildet, dass durch die Einbaudrehlage des Ventils die Strömungsrichtung des durch das Ausströmfenster in den Heizkörper ausströmenden Heizmediums bestimmt werden kann. Je nachdem, in welche Richtung das Ausströmfenster im eingebauten Zustand zeigt (zur vorderen Heizplatte, zur hinteren Heizplatte oder in einen dazwischen liegenden Bereich) werden diese Platten bzw. Durchströmungszonen unterschiedlich stark von dem einströmenden Heizmedium beaufschlagt und erwärmt. Wird beispielsweise das Ventil beim Einbau so gedreht, dass das Ausströmfenster im Wesentlichen der vorderen Heizplatte zugewandt ist, so strömt das Heizmedium größtenteils unmittelbar in diese Heizplatte, und nur ein geringer Anteil wird (etwa durch Verwirbelungen oder sonstige Strömungsstörungen) in Richtung auf die hintere Heizplatte umgelenkt und in diese eingeströmt. Wird das erfindungsgemäße Ventil mitsamt dem Ausströmfester in seiner Einbaulage gedreht, so können die Abströmverhältnisse stromabwärts des Ventils verändert werden, um beispielsweise auch der hinteren Heizplatte einen größeren Anteil des Vorlaufs zuzuführen.

Ein solches Ventil vereinfacht erfindungsgemäß die Einflussnahme auf die Strömungsführung bzw. Aufteilung der Strömungsanteile innerhalb des Heizkörpers erheblich, ohne dass dafür der Heizkörper selber weitere konstruktive Elemente erfordert.

Eine weitere vorteilhafte Ausführungsform der Erfindung sieht in Anlehnung an das vorgenannte Ventil vor, dass um den Ventileinsatz eine im Wesentlichen hülsenförmige, relativ zum Ventileinsatz drehbare äußere Hilfskammer vorgesehen ist. Die Hilfskammer wird über den Ventileinsatz gestülpt und weist wenigstens eine radiale Abströmöffnung auf. Der in den Ventileinsatz eingeführte Vorlauf tritt dabei zunächst durch das Abströmfenster des Ventileinsatzes in den Bereich innerhalb der Hilfskammer ein. Von dort wird das Heizmedium durch die Abströmöffnung der Hilfskammer nach außen in den Heizkörper eingeleitet. Mit Hilfe der drehbaren Hilfskammer wird also die Richtung des aus der Hilfskammer durch die Abströmöffnung ausströmenden Heizmediums festgelegt, wobei diese Richtung wieder bevorzugt auf die vordere Durchströmungszone, auf die hintere oder einen Bereich dazwischen gerichtet sein kann. Während bei dieser Ausführungsform der Ventileinsatz im Wesentlichen ortsfest und nicht drehbar in den Heizkörper eingesetzt werden kann, wird die Ausströmrichtung beim Einbau durch die Ausrichtung der Hilfskammer festgelegt, denn allein deren Abströmöffnung bestimmt die Richtung des in den Heizkörper einströmenden Heizmediums. Die Hilfskammer kann dabei vor dem Einbau so ausgerichtet werden, dass Ihre Abströmöffnung (unabhängig von der Ausrichtung des Ventileinsatzes) in die gewünschte Richtung weist.

Vorteilhafterweise kann die Hilfskammer mit dem Ventileinsatz einen teilweise oder vorzugsweise vollständig umlaufenden Ringraum ausbilden. In diesem Fall tritt das aus dem Ventileinsatz kommende Heizmedium des Vorlaufs in den Ringraum ein und füllt diesen vollständig aus. Durch Wahl der relativ zum Ventileinsatz drehbaren Hilfskammer mit ihrer Abströmöffnung kann die Richtung des in den Heizkörper strömenden Heizmediums frei gewählt werden, vorzugsweise im Bereich zwischen 0° und 360°.

Eine andere Ausführungsform der erfindungsgemäßen Vorrichtung als Ventil sieht dabei vor, dass das Ventil eine im Einbauzustand ortsfeste Regelschürze aufweist, die insbesondere auch zur Befestigung des Ventils in der Einbaulage dient. Die Regelschürze ist nicht drehbar, verfügt aber über ein in Umfangsrichtung begrenztes und in radialer Richtung ausgebildetes Ausströmfenster. Die Regelschürze umgibt dabei eine innere, relativ zum Heizkörper drehbare Hilfskammer. Die Hilfskammer weist ihrerseits eine das Heizmedium ausströmende Abströmöffnung auf, wobei diese Abströmöffnung typischerweise kleiner gehalten ist als das Ausströmfenster der Regelschürze. Durch Drehen der inneren Hilfskammer wird auch die Abströmöffnung der Hilfskammer mitgedreht, so dass diese im eingebauten Zustand beispielsweise wieder in Richtung auf die vordere Durchströmungszone gerichtet werden kann. Der Winkel, um den die Austrittsrichtung des Heizmediums geschwenkt werden kann wird dabei begrenzt durch die Größe des Ausströmfensters der Regelschürze. Möglich wären auch zwei sich überlappende Regelschürzen, um zusätzlich zur definierten Abströmung noch ein Voreinstellungsmöglichkeit zu erhalten.
Nach einer weiteren vorteilhaften Ausführungsform der Erfindung soll die Vorrichtung, sofern sie als Ventil ausgebildet ist, in Bezug zum Heizkörper drehbar angeordnet sein, um die Abströmrichtung des Heizmediums innerhalb des Heizkörpers zu bestimmen. Zum Einsatz kommen kann dabei insbesondere eine spezielle Dichtung, die eine Drehbewegung des Ventils innerhalb einer vorgebbaren Toleranz bzw. eines vorgebbaren Schwenkwinkels erlaubt, ohne die Dichtigkeit zu gefährden. Insbesondere kommt hierfür ein drehbares Ventil infrage, welches um etwa 180° in seiner Drehlage veränderbar ist. Dann kann die in den Heizkörper hineinreichende Ausströmöffnung des Ventils um einen Halbkreis geschwenkt werden, um gezielt die vordere Durchströmungszone, die hintere Durchströmungszone oder einen dazwischen liegenden Bereich anzuströmen.

Es versteht sich von selbst, dass die hier beschriebenen erfindungsgemäßen Ventile auch zur Regelung des Durchsatzes ausgebildet sind, was bei der vorliegenden Erfindung jedoch nicht im Vordergrund steht.

Eine andere Ausführungsform der Erfindung sieht vor, dass wenigstens ein Teil des gemeinsamen Vorlaufs dem Heizkörper durch ein in den Heizkörper hineinragendes Schnorchelelement zuführbar ist. Das Schnorchelelement ist dabei erfindungsgemäß in Richtung auf eine bevorzugte Durchströmungszone ausrichtbar. Alternativ kann es auch um ein vorgebbares Maß in diese Zone hineinragen. Diese Variante stellt ebenfalls eine sehr einfache Möglichkeit dar, um die Strömungsanteile für die einzelnen Durchströmungszonen gezielt zu beeinflussen. So kann der beispielsweise von einem Standardventil kommende Schnorchel dem Vorlauf der vorderen Durchströmungszone zuführen, indem der Schnorchel um ein Maß in diese Zone hineinragt. Während der Vorlauf zum Großteil durch diese vordere Durchströmungszone geführt wird entstehen durch Rückstau oder Verwirbelungen nur geringe Vorlaufanteile, die auf der Außenseite des Schnorchels in Richtung auf die hintere Durchströmungszone geführt werden. Die Länge des Schnorchels vermag dabei ebenso den Strömungsanteil zu bestimmen wie dessen Ausrichtung im Heizkörper. Vorteilhafterweise kann ein solcher Schnorchel mit einem Ventil in den Heizkörper eingesetzt werden, wobei das freie Ende des Schnorchels beim Einsatz beispielsweise in den Bereich der vorderen Durchströmungszone eingeschoben werden kann. Je nach Bauart des Heizkörpers und der räumlichen Einbaubedingungen kann der Schnorchel dabei flexibel oder auch im Wesentlichen starr ausgeführt sein.

Der Schnorchel kann sich auch weit in den Heizkörper hinein erstrecken und eine stirnseitige und/oder eine oder mehrere seitliche Ausströmöffnungen aufweisen. Damit kann auch ein gezieltes Einströmen in einzelne Sektoren innerhalb einer Durchströmungszone erreicht werden, also etwa die gezielte Einströmung in einzelne Rohre. Auch die Verwendung mehrer, ggfls. auch unterschiedlich ausgebildeter und am Ventil angeordneter Schnorchel ist gemäß einer vorteilhafte Ausführungsform vorgesehen, um die Strömungsverhältnisse in Richtung auf die einzelnen Durchströmungszonen und/oder innerhalb einer Zone gezielt zu beeinflussen.

Eine andere Umsetzung des erfindungsgemäßen Gedankens wird dadurch erreicht, dass die Vorrichtung wenigstens ein unter einem Anstellwinkel angeordnetes Leitblech umfasst. Das Leitblech soll zur vorzugsweise ungleichen Aufteilung des gemeinsamen Vorlaufs dienen, so dass jeweils einer Durchströmungszone unterschiedliche Teilströme zugeführt werden. Das Leitblech wird erfindungsgemäß von dem gemeinsamen Vorlauf angeströmt. Je nach seiner Stellung zur Strömungsrichtung wird ein Teil des Vorlaufs in die eine bzw. andere Richtung abgelenkt, so dass auch hier beispielsweise ein Großteil der Strömung in den Bereich der vorderen Durchströmungszone umgelenkt werden kann. Das Leitblech kann als Teil eines in den Heizkörper einzusetzenden Ventils ausgebildet sein, jedoch ist auch dessen getrennte Anordnung unmittelbar im Bereich des gemeinsamen Vorlaufs innerhalb des Heizkörpers denkbar. Typischerweise bildet der Anstellwinkel des Leitblechs mit der Anströmungsrichtung des gemeinsamen Vorlaufs einen Anstellwinkel ungleich 0° bzw. 180°, um eine ungleiche Aufteilung der Strömungen zu erreichen.
Eine besonders vorteilhafte Weiterentwicklung dieses erfinderischen Gedankens liegt darin, wenigstens ein Leitblech zur Änderung seines Anstellwinkels in Abhängigkeit der Temperatur auszubilden. Dabei kann es sich vorzugsweise um ein Bimetall handeln, welches unmittelbar das Leitblech bildet oder ein solches mit einer Verformungskraft beaufschlagt. Ändert sich der Anstellwinkel des wenigstens einen Leitblechs in Abhängigkeit von der Temperatur, so können die Strömungsverhältnisse im Heizkörper ohne von außen erforderliche Einflussnahme automatisch geregelt werden. Die Temperatur des Blechs kann dabei im Wesentlichen von dem das Blech anströmenden Heizmedium bestimmt sein. Ergänzend oder alternativ kann die Temperatur auch wesentlich durch die eigentliche Heizkörpertemperatur beeinflusst werden, so dass sich der Anstellwinkel des Blechs in Abhängigkeit von der Heizkörpertemperatur am Ort des Leitblechs verändert. Das Leitblech kann in Abhängigkeit seines Anstellwinkels einen Strömungskanal öffnen oder verschließen oder einen Strömungsquerschnitt so verändern, dass der Vorlauf in geeigneter Weise aufgeteilt wird für die einzelnen Durchströmungszonen. Auch der Einsatz mehrerer solcher Leitbleche an unterschiedlichen Stellen im Heizkörper, vorzugsweise im Bereich des gemeinsamen Vorlaufs, ist denkbar.

Insbesondere kann für einen Heizkörper mit zwei Durchströmungszonen ein T-Stück vorgesehen sein, welches von dem gemeinsamen Vorlauf durchströmt wird und an wenigstens einem seiner beiden Schenkel ein Leitblech der vorbeschriebenen Art auf weist. Das Leitblech wird dabei insbesondere in Abhängigkeit von der Vorlauftemperatur seinen Öffnungswinkel ändern und so die Strömungsverhältnisse im Heizkörper beeinflussen. Das beschriebene T-Stück kann vorzugsweise zusammen mit einem Ventil in den Heizkörper eingesetzt werden. Bei geeigneter Dimensionierung kann das T-Stück leicht ausgetauscht und durch ein anderes ersetzt werden, um andere Strömungsverhältnisse zu erzielen. Grundsätzlich findet das T-Stück auch Verwendung mit Leitblechen, deren Anstellwinkel temperaturunabhängig ist und konstant bleibt.

Weitere vorteilhafte Ausführungsformen ergeben sich aus den Unteransprüchen.

Nachfolgend werden einige Ausführungsformen der Erfindung anhand von Figurenbeispielen erläutert. Von den Figuren zeigt:
- Fig. 1: eine erfindungsgemäße Vorrichtung in einfacher Form,
- Fig. 2: eine Vorrichtung in Ventilform mit äußerer Hilfskammer,
- Fig. 3: eine Vorrichtung in Ventilform mit innerer Hilfskammer,
- Fig. 4: eine Vorrichtung in Ventilform mit einem aufgesetzten Schnorchelelement,
- Fig. 5: die Anordnung eines erfindungsgemäßen Leitblechs und
- Fig. 6: eine erfindungsgemäße Vorrichtung in Form eines T-Stücks mit zwei Leitblechen.

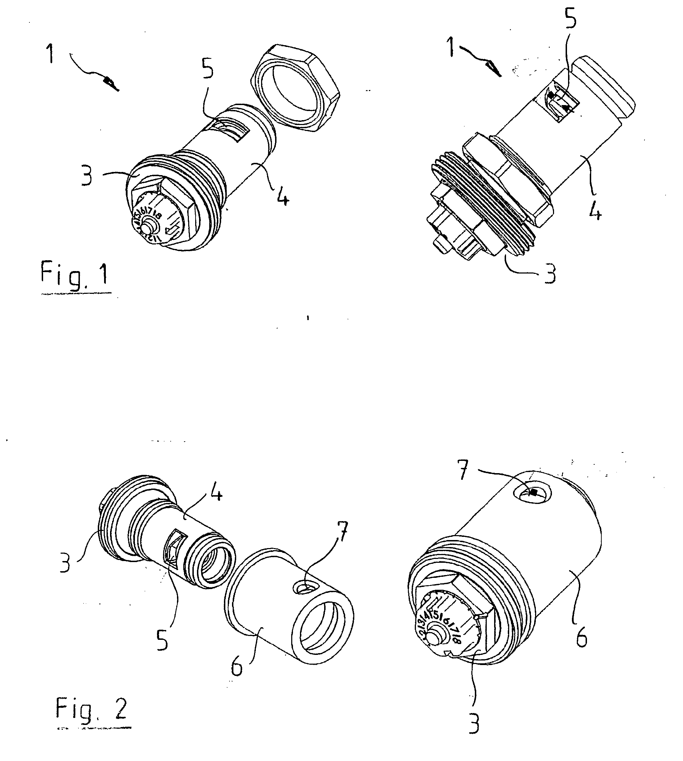

Fig. 1 zeigt eine Vorrichtung 1 in Form eines Ventils 3, welches zum Einsatz in einem nicht näher dargestellten Heizkörper 2 vorgesehen ist. Das Ventil 3 umfasst einen Ventileinsatz 4, der im Wesentlichen zylindrische Gestalt hat und nach dem Einbau zum Teil in den Heizkörper hineinragt. Der Ventileinsatz 4 umfasst weiterhin ein Ausströmfenster 5, welches in dieser Ausführungsform eine im Wesentlichen rechteckige (grundsätzlich jedoch beliebige) Gestalt hat und den Durchtritt des Vorlaufs aus diesem Ausströmfenster 5 hinaus erlaubt.

Wie im rechten Teil der Fig. 1 zu sehen ist, wird das Ventil 3 durch eine Kontermutter fixiert. Erfindungsgemäß ist das Ventil 3 drehbar, wobei das Ausströmfenster 5 seine Orientierung ändert. Das Vorlaufmedium strömt bevorzugt in die Richtung weiter, in der es aus dem Ausströmfenster 5 heraustritt, so dass durch Wahl der Drehlage des Ventils 3 auch die Strömungsrichtung des Vorlaufmediums innerhalb des Heizkörpers gewählt werden kann. Eine geeignete Dichtung erlaubt dabei die Drehung des Ventils 3 um ein vorgebbares Maß, ohne dass Undichtigkeiten zu beobachten sind.

Fig. 2 zeigt eine abgewandelte Ausführungsform der erfindungsgemäßen Vorrichtung, ebenfalls unter Nutzung eines Ventils 3. Das Ventil 3 weist wiederum einen Ventileinsatz 4 mit dem bereits vorbeschriebenen Ausströmfenster auf. In diesem Fall muss das Ventil 3 jedoch nach der Montage nicht drehbar sein. Die gezielte Ausströmung des Vorlaufs innerhalb des Heizkörpers wird vielmehr durch eine Hilfskammer 6 mit einer diese Hilfskammer durchdringende Abströmöffnung 7 erzielt.

Im rechten Teil der Fig. 2 ist dazu zu sehen, wie die Hilfskammer 6 auf den Ventileinsatz 4 aufgesetzt wird. Dabei bildet sich zwischen der Hilfskammer 6 und dem Ventileinsatz 4 ein Ringraum aus, der von dem aus dem Ausströmfenster 5 austretenden Heizmedium zunächst vollständig beaufschlagt wird. Durch Drehung der Hilfskammer 6 wird dessen Abströmöffnung 7 entsprechend mitgedreht, so dass die Ausströmrichtung des Heizmediums im Heizkörper von der Lage dieser Abströmöffnung 7 abhängt. Die Drehlage der Hilfskammer 6 kann dabei vor Einbau des Ventils 3 festgelegt werden. Denkbar ist jedoch auch hier die Drehbarkeit der gesamten Anordnung, so dass das Ventil (gegebenenfalls mit einer geeigneten Dichtung) um ein vorgebbares Maß schwenkbar ist, um die Abströmöffnung 7 innerhalb des Heizkörpers geeignet auszurichten.

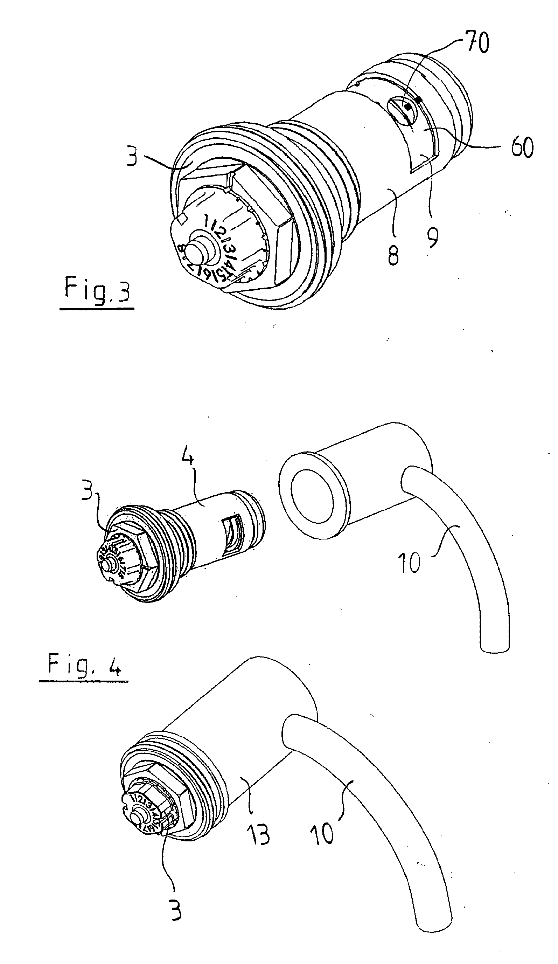

Fig. 3 zeigt ein Ventil 3, bei dem eine im Wesentlichen ortsfeste Regelschürze 8 hülsenförmig auf das Ventil aufgesetzt ist. Die Regelschürze 8 ist von einem Ausströmfenster 9 durchsetzt, welches sich über einen Teil des Umfangs der Regelschürze 8 erstreckt.

Die Regelschürze 8 umgibt eine Hilfskammer 60, die ihrerseits eine Abströmöffnung 70 aufweist, wobei die Abströmöffnung 70 kleiner ausfällt als das Ausströmfenster 9. Während die Regelschürze 8 im Wesentlichen ortsfest und nicht drehbar sein soll kann die innere Hilfskammer 60 mit ihrer Abströmöffnung 70 geschwenkt werden, so dass der Austritt des Heizmediums wieder durch die Drehlage der Hilfskammer 60 und ihrer Abströmöffnung 70 bestimmt wird (so lange die Abströmöffnung 70 das Ausströmfenster 9 überlagert).

Die Drehung der inneren Hilfskammer 6 kann wiederum erreicht werden durch Drehung des gesamten Ventils 3, wodurch die Hilfskammer 60 mit bewegt wird. Denkbar ist auch ein geeigneter anderer Mechanismus, um die Drehbarkeit der Hilfskammer 60 abhängig vom Ventil 3 zu ermöglichen bzw. zu gestalten.

In Fig. 4 ist ein bereits vorbeschriebenes Ventil 3 mit einem Ventileinsatz 4 gezeigt. Im unteren Teil der Fig. 4 ist zu sehen, wie der in axialer Richtung angeströmte Ventileinsatz 4 von einer Hilfskammer 13 umgeben ist, an die sich seitlich radial ein Schnorchelelement 10 anschließt. Das Schnorchelelement 10 führt das Vorlauf-Heizmedium gerichtet in den Heizkörper ein, wozu es beispielsweise über eine bestimmte Länge in eine gewünschte Durchströmungszone des Heizkörpers eingeschoben werden kann. Der Schnorchel kann eine stirnseitige und/oder eine oder mehrere seitliche Ausströmöffnungen aufweisen und auch weit in den Heizkörper bzw. die Durchströmungszone hineinragen. Der Schnorchel kann flexibel oder auch im Wesentlichen starr ausgebildet sein. Auch sind weitere Öffnungen am Schnorchel denkbar, um die gewünschten Strömungsverhältnisse bzw. Strömungsaufteilungen bestmöglich zu erreichen.

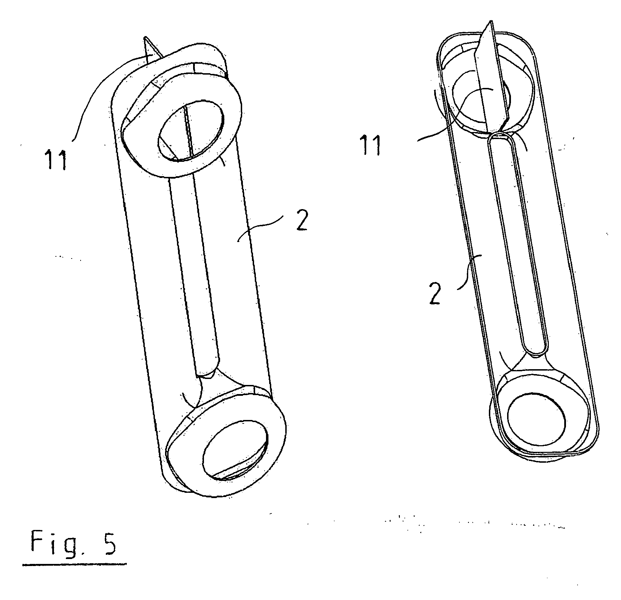

Fig. 5 zeigt in Teilansicht einen Heizkörper 2, der im Wesentlichen für zwei getrennte Durchströmungszonen ausgebildet ist. Am oberen gemeinsamen Zulauf des Heizkörpers ist auf der Innenseite ein Leitblech 11 angeordnet, welches das einströmende Heizmedium - je nach Winkel des Leitblechs 11 - in Richtung auf die vordere oder hintere Durchströmungszone ablenken kann. Dadurch wird der Vorlauf in zwei - vorzugsweise unterschiedliche - Anteile für die beiden Durchströmungszonen aufgeteilt.

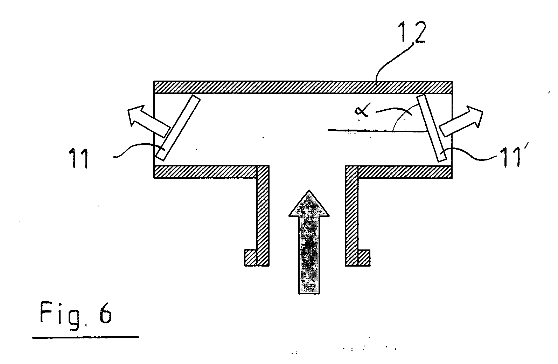

In Fig. 6 ist ein erfindungsgemäßes T-Stück gezeigt, welches von unten durch den gemeinsamen Vorlauf beströmt werden soll. Die rechts und links des T-Stücks nicht dargestellten beiden Durchströmungszonen sollen von dem einströmenden Medium beaufschlagt werden, wobei unterschiedliche Strömungsanteile gewünscht sind.
In jedem Schenkel des T-Stücks ist ein Leitblech 11 bzw. 11` angeordnet, welches seinen Anstellwinkel ά in Abhängigkeit von seiner Temperatur verändert. Die Temperatur, die hier insbesondere von dem Vorlaufmedium bestimmt wird, bewirkt ein Öffnen bzw. Schließen der einzelnen Leitbleche 11 bzw. 11'. Sofern die Leitbleche unterschiedliche Temperaturcharakteristika aufweisen ergeben sich unterschiedliche Öffnungswinkel für die beiden Leitbleche 11 und 11 und damit auch unterschiedliche Strömungsanteile des Vorlaufs für die beiden Durchströmungszonen.

Ein Leitblech 11 in nur einem der beiden Schenkel kann ebenfalls ausreichen.

## Patentansprüche

1. Vorrichtung (1) zur Einströmung von Heizmedium in einen Heizkörper (2),
a) wobei der Heizkörper (2) stromabwärts eines gemeinsamen Vorlaufbereichs wenigstens zwei Durchströmungszonen aufweist, und
b) wobei das Heizmedium dem Heizkörper (2) über den Vorlaufbereich zuführbar ist,
**dadurch gekennzeichnet,**
c) **dass** die Vorrichtung (1) im Bereich des für alle Durchströmungszonen gemeinsamen Vorlaufbereichs anströmbare Mittel aufweist, um einzelne Strömungsanteile gezielt in Richtung auf die einzelnen Durchströmungszonen zu lenken.

2. Vorrichtung (1) nach Anspruch 1, **dadurch gekennzeichnet, dass** die Vorrichtung (1) als ein vom gemeinsamen Vorlauf durchströmtes Ventil (3) ausgebildet ist.

3. Vorrichtung (1) nach Anspruch 2, **dadurch gekennzeichnet, dass** das Ventil (3) einen Ventileinsatz (4) umfasst, der ein in radialer Richtung ausgebildetes und dabei in Umfangsrichtung begrenztes Ausströmfenster (5) aufweist, um durch die Einbaulage des Ventils (3) die Strömungsrichtung des durch das Ausströmfenster (5) in den Heizkörper (2) abströmenden Heizmediums zu bestimmen.

4. Vorrichtung (1) nach einem der beiden vorhergehenden Ansprüche, **dadurch gekennzeichnet, dass** um den Ventileinsatz (4) eine im Wesentlichen hülsenförmige, relativ zum Ventileinsatz (4) drehbare äußere Hilfskammer (6) mit wenigstens einer radialen Abströmöffnung (7) vorgesehen ist, um das aus dem Ventileinsatz (4) in die Hilfskammer (6) eintretende Heizmedium durch die Abströmöffnung (7) in den Heizkörper (2) zu leiten und dabei durch Wahl der Drehlage der Hilfskammer (6) die Strömungsrichtung des durch die Abströmöffnung (7) abströmenden Heizmediums zu bestimmen.

5. Vorrichtung (1) nach dem vorhergehenden Anspruch, **dadurch gekennzeichnet, dass** die Hilfskammer (6) mit dem Ventileinsatz (4) einen diesen teilweise oder vollständig umlaufenden Ringraum ausbildet, so dass die Richtung des aus der Abströmöffnung (7) ausströmenden Heizmediums durch Vorgabe der Drehlage der Hilfskammer (6) innerhalb des Öffnungswinkels des Ringraumes wählbar ist.

6. Vorrichtung (1) nach einem der Ansprüche 2 oder 3, **dadurch gekennzeichnet, dass** das Ventil (3) eine im Einbauzustand ortsfeste Regelschürze (8) aufweist, die ein in radialer Richtung ausgebildetes und dabei in Umfangsrichtung begrenztes Ausströmfenster (9) umfasst, wobei die Regelschürze (8) eine innere, relativ zum Heizkörper (2) drehbare Hilfskammer (60) umgibt, die ihrerseits eine das Heizmedium ausströmende Abströmöffnung (70) aufweist, welche durch Drehbewegung der inneren Hilfskammer (60) in Überlagerung mit dem Ausströmfenster (9) bringbar ist.

7. Vorrichtung (1) nach einem der vorhergehenden, ein Ventil (3) betreffenden Ansprüche, **dadurch gekennzeichnet, dass** die Drehlage des Ventils (3) im Bezug zum Heizkörper (2), insbesondere unter Nutzung einer drehbaren Dichtung, veränderbar ist.

8. Vorrichtung (1) nach Anspruch 1, **dadurch gekennzeichnet, dass** wenigstens ein Teil des gemeinsamen Vorlaufs dem Heizkörper (2) durch ein in den Heizkörper (2) hineinragendes Schnorchelelement (10) zuführbar ist, wobei das Schnorchelelement (10) dabei in Richtung auf eine bevorzugte Durchströmungszone ausgerichtet ist und/oder in diese Zone hineinragt.

9. Vorrichtung (1) nach Anspruch 1, **dadurch gekennzeichnet, dass** die Vorrichtung (1) wenigstens ein unter einem Anstellwinkel angeordnetes Leitblech (11) umfasst, welches zur vorzugsweise ungleichen Aufteilung des gemeinsamen Vorlaufs in jeweils einer Durchströmungszone zugeordnete Teilströme ausgebildet ist.

10. Vorrichtung (1) nach dem vorhergehenden Anspruch, **dadurch gekennzeichnet, dass** das wenigstens eine Leitblech (11) mit einer Anströmrichtung des gemeinsamen Vorlaufs einen Anstellwinkel ungleich 0° oder ungleich 180° bildet.

11. Vorrichtung (1) nach einem der beiden vorhergehenden Ansprüche, **dadurch gekennzeichnet, dass** wenigstens ein Leitblech (11) zur Änderung seines Anstellwinkels in Abhängigkeit der Temperatur ausgebildet ist.

12. Vorrichtung (1) nach einem der drei vorhergehenden Ansprüche, für einen Heizkörper (2) mit zwei Durchströmungszonen, **dadurch gekennzeichnet, dass** das wenigstens eine Leitblech (11) an einem in den Heizkörper (2) einsetzbaren, vom Vorlauf durchströmten T-Stück (12) angeordnet ist.

13. Vorrichtung (1) nach dem vorhergehenden Anspruch, **dadurch gekennzeichnet, dass** der gemeinsame Vorlauf über den Anstellwinkel des wenigstens einen Leitblechs (11), welches an wenigstens einem Schenkel des T-Stücks (12) angeordnet ist, in Strömungsanteile für die beiden Durchströmungszonen aufteilbar ist.
